# EUROPEAN PATENT APPLICATION

(11) **EP 3 034 272 A1**
(43) Date of publication of application: **22.06.2016**
(21) Application number: 14004225.0
(22) Date of filing: 15.12.2014
(51) Int. Cl.: B29C 53/06, B65D 81/05, B65D 85/66, B65H 75/14

(54) **Flat angled bracket**

(71) Applicant: Codiflex Industria e Comercio de Manufacturados Ltda, Paraná (BR)
(72) Inventor: Geceler Pereira, Adriano, Paraná (BR)
(74) Representative: Juncosa Miro, Jaime

(57) **Abstract**

The flat angled bracket enables, in accordance with its characteristics, the formation of a flat angled bracket (1) having a monolithic body structure suitable for and specific to the type which is mechanically extruded with a folding rectilinear profile through a pair of single and double indentations (3, 4), aligned in opposition to each other and that fits symmetrically around the whole extension of the exterior lateral edges of the spools and the like, with a view to enabling a highly practical, safe and economical form, which offers complete optimization for logistical procedures involving spools (A) and similar elements, together with complete maintenance of the reliability of the spool (A) and similar elements and the application of an environmentally friendly concept and, based on, a flat angled bracket (1) with high strength, safety and versatility easily adaptable to a vast range of spools (A), equipment, users and locations in general.

## Description

The present invention concerns protection devices for logistics in general, more specifically to a flat angled bracket which, in accordance with its general characteristics, has as its basic principle the ability to offer the formation of a monolithic body structured flat bracket suitable for and specific to an extruded mechanical type having a foldable rectilinear profile through a pair of simple and double recesses aligned in opposition to each other and that fits symmetrically around the whole extension of exterior lateral edges of spools and the like, with a view to enabling a highly practical, safe and economical form, which offers complete optimization for logistical procedures involving spools and similar elements, together with complete maintenance of the integrity of the spools and similar elements and the application of an environmentally friendly concept and based on, a flat angled bracket with high strength, safety and versatility. With a design and specific shape which offers easy access to better adaptation and security of users, with practical and functional handling characteristics, at a very accessible price and, due to its general characteristics and dimensions, easily adaptable to a wide range of spools, equipment, users and locations in general, regardless of the characteristics that they may present.

Currently, almost all of the operations and equipment widely known in the prior art and used to protect the free edges of spools and similar elements in general, primarily their exterior lateral edges during logistical procedures, such as, for example, transportation, packaging and handling operations, are based on simple circular structures made from cardboard, metal, or similar items which are designed to fit around the whole length of the spool edges or similar elements, in a completely manual way.

It is noteworthy that, in many cases, routinely performed logistical procedures involving the spools and similar elements, no operation or specific equipment is used for this protection, thus leaving the spools or similar elements totally unprotected, primarily against the constant action of mechanical strength and resistance to ovality, that can directly cause the complete destruction of the spool or similar elements.

This course of action has become essential for companies that perform several different types of logistical operations with spools and similar elements in general, as well as for spool manufacturers and users in general, structuring a versatile, practical, safe and ergonomic structure capable of protecting the front spools and similar elements against stresses generated upon the external surfaces of the spools and similar elements, primarily during routine handling and transport procedures for spools and similar elements.

In an extensive review of the literature in order to establish the prior art with regard to protection devices for logistical operations involving spools and similar elements, which is the object of the present invention. No relevant documents in the prior art were found relating to the specific object claimed in the present invention, i.e., a flat angled bracket that symmetrically fits the lateral edges of any spool, regardless of type or size.

The patent in question is characterized in that it joins components and processes in a differentiated design, which meet the various requirements that the nature of the use demand, i.e., protection of the outside edges of the spools and similar elements procedures for logistics. This concept guarantees a method a flat angled bracket which offers great efficiency, functionality, staying power, durability, security, versatility, economy, ergonomics, and accuracy, due to its excellent aggregate technical qualities. Which thereby provide advantages and improvements in the logistical procedures involving spools and similar apparatus in general and, whose general characteristics differ from the other forms and models of protection devices widely known in the prior art.

The present invention concerns the use of a modern, efficient, safe and functional flat angled bracket made up of a set of properly integrated mechanical and logistical solutions, comprising a flat angled bracket which is complete and differentiated having an exclusive design, with details of optimal finishing and unique characteristics, which incorporates a monolithic body structure which is proprietary and specific to a mechanical type, having high durability and strength, in the shape of a ring, and containing within, seamlessly arranged symmetrical elements by extrusion from a plate as part of the structure of flat angle bracket, a simple indentation which is an element of the former folding of the flat angled bracket, a double indentation which is an element of the former folding of the flat angled bracket, and a set of cutouts to be used as flexible and adjustment elements for the flat angled bracket to a spool or similar element, so as to enable the formation of a single, complete and secure set, whose shapes and internal and external arrangement enabling a seamless adaptation to a wide range of both users and spools and similar elements in general, for which purpose they were specially designed.

Therefore, the overall design of this flat angled bracket, which is the object of the present invention, is entirely based on its simple and robust structure with a minimum of necessary components and extremely simplified operability, which is secure and optimized, together with manufacturing and maintenance procedures which are quite practical, in order to build, using the extrusion process with a rack suitable for a flat angled bracket that is practical and efficient, capable of generating excellent foldability between its two higher and lower flaps formed by the indentations and able to fit around the exterior lateral edges of the spools or similar elements, both through their indentations, i.e., completely protecting and structuring the exterior lateral edges of the spools or similar elements, as support in many situations where there is a higher demand for mechanical strength or mechanical traction, as well as having a high degree of flexibility that meets the various specifications of spools or similar elements.

This flat angled bracket is based on the application of components and processes in a differentiated concept, without, however, becoming highly sophisticated and complex, making it possible to solve some of the major drawbacks of the other widely known forms and models of the prior art and used to protect the lateral edges of the spools and similar elements during logistical procedures in general, which lie in a work sector in which the difficulties in utilization and application, low efficiency and performance as well as a high frequency of accidents and the forms and/or models or are based on simple adaptations, thereby constituting an unsafe practice, great deterioration and fragility, poor durability and strength, low versatility, laborious application, huge losses, low yield and which are not very ecologically sensitive, or that are large. They also have a very high cost, an elevated volume and weight, with poor flexibility, complex handling, a great waste of time, with high levels of waste, complex manufacturing and low performance.

The objectives, advantages and other important characteristics of the patent in question will be more easily understood when read in conjunction with the accompanying figures, in which:

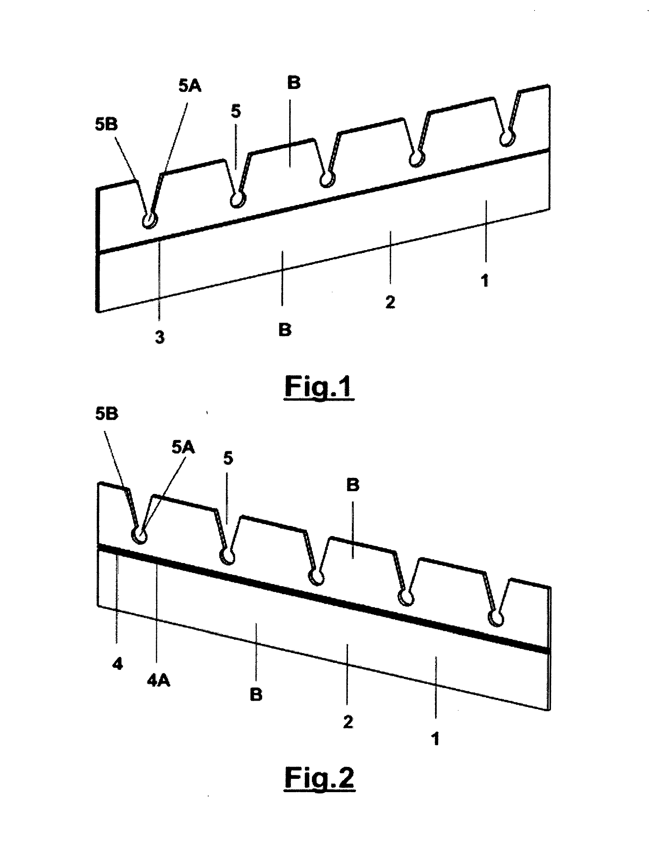

Figure 1 shows a view in perspective of the outside of the flat angled bracket.
Figure 2 shows a view in perspective of the interior of the flat angled bracket.

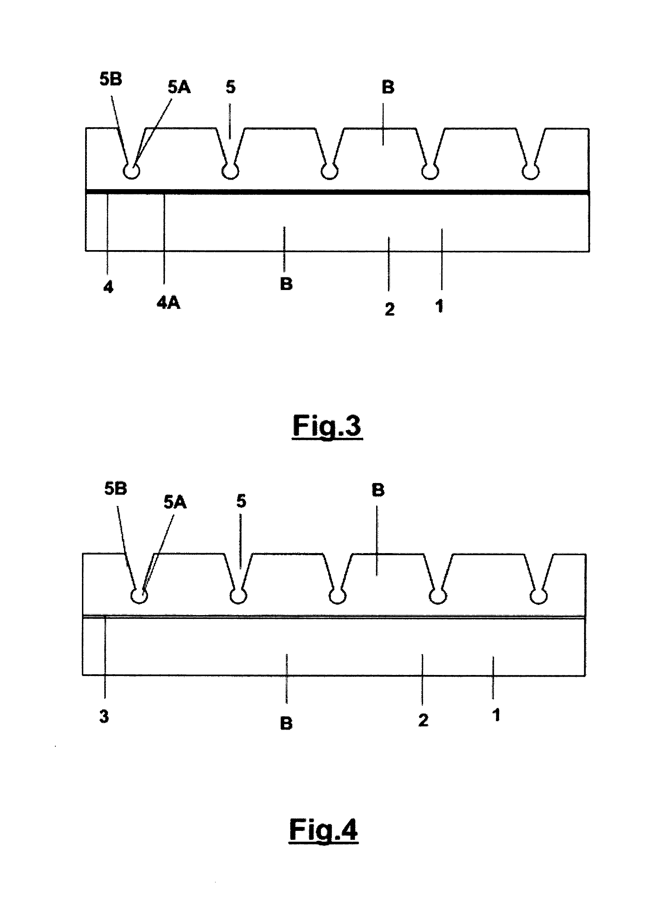

Figure 3 shows a view in perspective of the interior of the flat angled bracket.
Figure 4 shows an exterior view of the flat angled bracket.

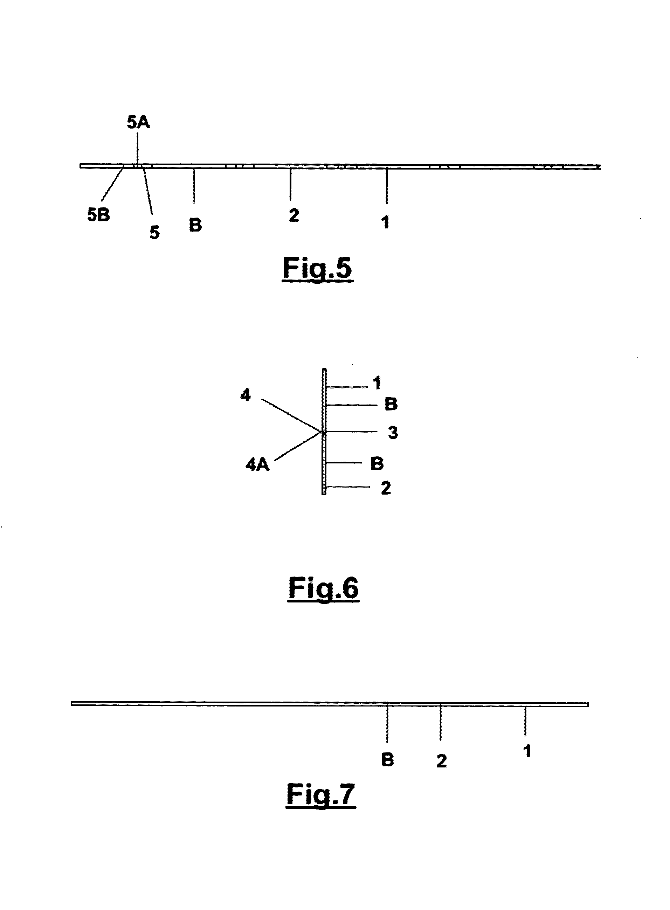

Figure 5 shows a top view of the flat angled bracket.
Figure 6 shows a side view of the flat angled bracket.
Figure 7 is a bottom view of the flat angled bracket.

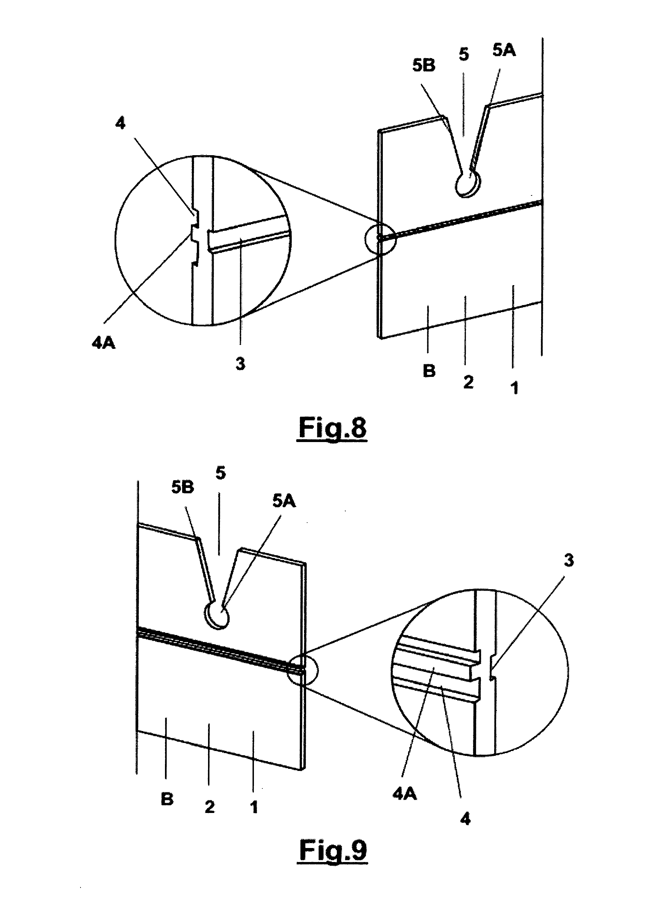

Figure 8 shows a view in perspective of the outside details of the flat angled bracket.
Figure 9 shows a view in perspective of the interior details of the flat angled bracket.

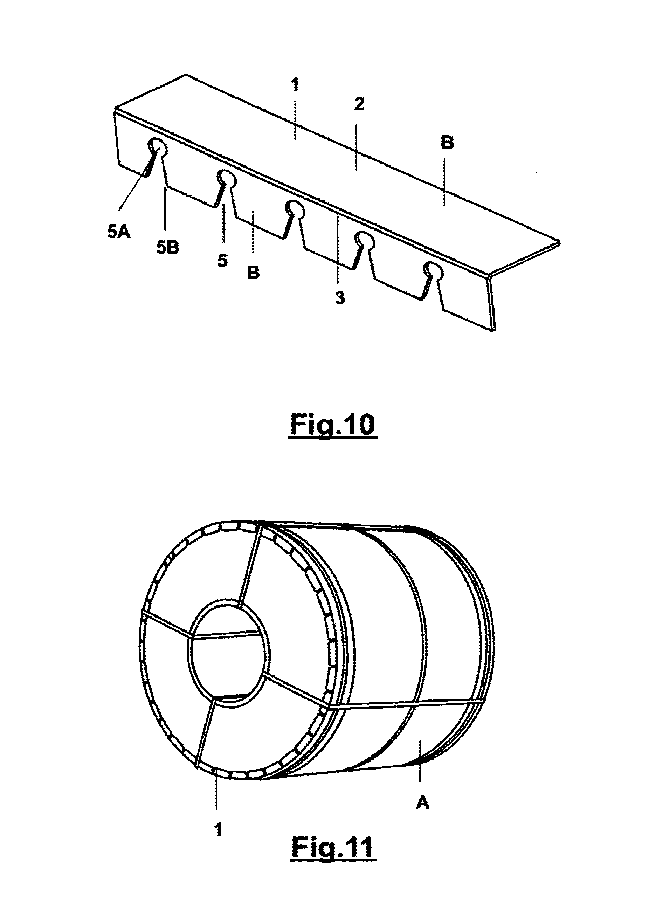

Figure 10 shows a view in perspective of the outside of the flat angled bracket arranged for use in spools or similar elements.
Figure 11 shows a view in perspective of the outside of the flat angled bracket applied to a spool or similar element.

As can be seen in the accompanying figures which illustrate and form an integral part of the present invention specification for the "Flat Angled Bracket" comprised by a complete flat angled bracket 1 with proprietary characteristics, which incorporates a distinctive and specific mechanical monolithic body structure of high durability and strength, having a generally annular shape, forms and internal and external arrangements which adapt to a wide range of spools A and similar elements, and containing arrangements which are seamlessly integrated and symmetrical with each other through an extrusion plate 2 of generally annular shape with a transverse rectangular cross section disposed symmetrically along the entire length of the flat angled bracket 1, with the primary function of structuring the flat angled bracket 1 as a whole; a single indentation 3 of a generally annular form of a rectilinear cross section and arranged symmetrically centered along the entire extension of the external surface of the plate 2, with the primary function of the external fold of the flat angled bracket 1; a double indentation 4 of a generally annular form of a rectangular cross section and arranged symmetrically centered along the entire extension of the internal surface of the plate 2 and subsequently aligned with the single indentation 3 and having a projection or ridge 4A of a generally annular shape and arranged in a slightly asymmetrical and semicircular cross section and disposed along the entire length of the double indentation 4 with the primary task of folding the inner flat angled bracket 1, being that both the simple indentation 3 and the double one 4 formed from the upper and lower ends of its two flanges B disposed along the entire length of plate 2; and a set of cutouts 5 arranged symmetrically aligned and spaced along the entire length of the free end of the upper flange B of the plate 2 and having a small central set of cutouts 5A of a generally circular shapes and arranged parallel and symmetrically centered and spaced around the entire length of the top flange B of the plate 2, and a set of small upper cutouts 5B of a generally inverted trapezoidal shape and each arranged vertically and symmetrically aligned and interconnected on a small central cutout 5A from the upper free edge of the flange B of the plate 2 to the upper end of a small central cutout 5A, with the primary function of flexibility and adaptation of the flat angle bracket 1 for the spool A or similar elements.

The flat angled bracket, according to the requirements of the application, may be comprised of a flat angled bracket 1 made of polypropylene material - PP or similar material which provides equal or greater lightness and strength, more specifically with similar properties, keeping all the other characteristics inherent to the flat angled bracket 1.

The protrusion or ridge 4A arranged along the entire length of the interior of the double indentation 4 having the primary purpose to facilitate manual or automatic procedures for folding the plate 2 around the spool edges A and along the single 3 and the double 4 indentations, as well as making this fold more accurate and symmetrical along these, i.e., making the flat angled bracket 1 more flexible, strong and uniform.

The operation of the flat angled bracket is based on its correct placement around the entire length of the exterior lateral edges of the spool A or similar elements, i.e., the internal surfaces of the flat angled bracket 1 fit around the entire length of the exterior lateral edges and the lateral surfaces adjacent to the spool A or similar elements, to couple to the spool A a flat angled bracket 1 acquiring the generally annular form of the cross-section, similar to an "L".

The flat angled bracket 1 is a modern, practical, and safe device, the forms and arrangements of which are in a single module which adapts itself directly to more varied types of spools A and similar elements, logistical, user, and local environments, regardless of the general characteristics that these possess and are specially designed with the geometry needed for the intended purposes, together with convenient handling and excellent general characteristics.

The flat angled bracket 1, due to having components that are fully integrated with the spool structure A or similar elements, there is nothing which detaches and nothing to break, bend or tear, achieving thereby a high rate of performance and efficiency, together with high durability and absolute safety. Since it is fully integrated together with the spool structure A or similar elements, the components remain locked and cohesive, thus preventing any loosening when in use, making the set fully available for protection procedures during the various types of logistical operations in general. Thus, the flat edged bracket 1 can be used without concern of any nature, especially with regard to the durability and safety of its components, and the spool A or similar elements, as well as the safety of its users.

Because of all disclosed above, we can see that this is a protection device that will be well received by the general transportation sector, as well as by manufacturers and users of spools A and similar elements in general, since the flat angled bracket 1 offers numerous advantages, such as: great safety, reliability and flexibility of application; great yield and performance in its application due to its general design; high degree of comfort, convenience and safety for the users; very high strength and durability, together with low or negligible waste from the assembly as a whole; totally accessible costs which makes it possible to achieve an optimal cost/benefit ratio; convenient and safe use by diverse users; great range of scope; very low and easy general maintenance; seamless and direct adaptation to diverse types of spools A; great mobility and flexibility of the assembly; a high level of operational ergonomics; excellent operational accuracy; based on an ecologically proper design; and the certainty of having a flat angled bracket 1 that fully complies with the laws and regulations and the basic conditions necessary for their application.

All these attributes make it possible to classify the flat angled bracket 1, as a fully versatile, efficient, practical and safe means to be applied to a great diversity of spools A and similar elements during a broad range of logistical procedures in general, with many diverse types of equipment, for a broad range of techniques and in diverse types and locations, regardless of the characteristics that they may present, still offering great ease of application and handling, combined with great performance and excellent general characteristics; however the measures, dimensions and quantities may vary according to the needs of each application.

## Claims

1. Flat angled bracket, **characterized in that** it is comprised of a flat angled bracket (1) which incorporates a monolithic body structure of a generally annular form and containing arrangements which are integrated and symmetrical with each other through an extrusion plate (2) of generally annular shape with a transverse rectangular cross section disposed symmetrically along the entire length of the flat angled bracket (1), a single indentation (3) of a generally annular form of a rectilinear cross section and arranged symmetrically centered along the entire extension of the external surface of the plate (2), a double indentation (4) of a generally annular form of a rectangular cross section and arranged symmetrically centered along the entire extension of the internal surface of the plate (2) and subsequently aligned with the single indentation (3) and having a projection or ridge (4A) of a generally annular shape and arranged in a slightly asymmetrical and semicircular cross section and disposed along the entire length of the double indentation (4) being that both the simple indentation (3) and the double one (4) formed from the upper and lower ends of its two flanges (B) disposed along the entire length of plate (2); and a set of cutouts (5) arranged symmetrically aligned and spaced along the entire length of the free end of the upper flange (B) of the plate (2) and having a small central set of cutouts (5A) of a generally circular shapes and arranged parallel and symmetrically centered and spaced around the entire length of the top flange (B) of the plate (2), and a set of small upper cutouts (5B) of a generally inverted trapezoidal shape and each arranged vertically and symmetrically aligned and interconnected on a small central cutout (5A) from the upper free edge of the flange (B) of the plate (2) to the upper end of a small central cutout (5A).

2. Flat angled bracket in accordance with Claim 1, **characterized in that** it comprises a flat angled bracket (1) made of polypropylene material PP or similar material which provides equal or greater lightness and strength, more specifically with similar properties, keeping all the other characteristics inherent to the flat angled bracket (1).
